# EUROPEAN PATENT APPLICATION

(11) **EP 2 264 643 A1**
(43) Date of publication of application: **22.12.2010**
(21) Application number: 09380122.3
(22) Date of filing: 19.06.2009
(51) Int. Cl.: G06K 9/00, G08B 13/19

(54) **Surveillance system and method by thermal camera**

(71) Applicant: Universidad de Castilla-La Mancha, 02071 Albacete (ES); Movirobotics S.L:, 02006 Albacete (ES)
(72) Inventor: Fernández Caballero, Antonio, 02071 Albacete (ES); Rubio Pérez, José Luis, 02006 Albacete (ES); Martinez Cantos, Javier, 02006 Albacete (ES)
(74) Representative: Carvajal y Urquijo, Isabel

(57) **Abstract**

Surveillance system by an infrared thermal camera comprising an infrared thermal camera to capture images and some data processing means configured to pre-process the image captured; binarize it by means of a thresholding method based on temperature measurements in order to determine the regions of interest in the binary image; apply morphological opening and closing operations to group said regions of interest; obtain the regions of interest of the image through the application of minimum area functions; and for each one of these regions of interest of the binary image: processing by columns to obtain subregions of interest and processing by rows the subregions obtained. Additionally, the data processing means enable to detect movement in the images through dynamic analysis by.optical flow or image difference.

The method comprises stages of operation analogous to the system described.

## Description

### FIELD OF THE INVENTION

The present invention refers to the field of surveillance systems, specifically the field of advanced surveillance methods based on infrared thermal camera for fixed or mobile applications on a vehicle or robot.

The invention adds an effective surveillance system, using architectures and components which enable to detect intrusions and collect very useful evidence for security personnel to make decisions about potential threats.

The invention includes different human detection methods through infrared which can be adapted to mobility and frequency conditions of image capturing.

### STATE OF THE ART

Current society demands products which are capable of freeing human beings from tedious and dangerous tasks, or tasks with little added value; in this context, there exist robotics technologies that favor this tendency. A great advance that has allowed the expansion of robotics in non-industrial contexts is the ability of autonomous navigation, which enables a robot to move without human intervention, and at the same time to perform tasks autonomously. An example of a successful application is the robot vacuum cleaners.

Apart from the domestic context, applications are extending, in such a way that robotics technologies are also applied in the area of security. The objective of automating surveillance rounds is to increase the ability to offer detection, coverage and to optimize the dedication of human resources to these tasks.

The need to have a surveillance system, which works autonomously, capable of inspecting and detecting possible intruders, which records and transmits evidence so that security personnel can confirm the thread, offers great market opportunities.

The devices that are commercially available do not offer an efficient solution for the surveillance task or the coverage capacity in indoor and outdoor areas, since they use functionally limited systems, which are unreliable and offer complex solutions.

To perceive the environment is fundamental in any application related to mobile robotics. The information of the environment enables the robot to navigate, avoid obstacles and execute a specific mission.

In this field of robotics, a new type of infrared sensor has been described which is adequate to calculate the distance and construct maps of the surroundings. Besides, the application of these infrared sensors enables to calculate the distance between a specific point to a flat and unknown surface, and at the same time they estimate the materials of said surface.

In this aspect, it is worth emphasizing that the use of autonomous robots or vehicles can offer significant benefits in the field of surveillance. In addition, studies have been carried out for the development of algorithms in the thermal field. In fact, the use of infrared surveillance cameras has been intensely studied for the last decades.

As regards these algorithms, it is worth pointing out that most of them support the hypothesis that the objects of interest, objects to be detected, have a higher temperature than that of the objects of the scene in which they are found. In fact, some animals can be seen in total darkness, and it is also possible to see colors outside the visual spectrum, which are not visible by human beings.

Infrared thermal video cameras detect differences related to the amount of thermal energy emitted or reflected by the objects in the scene. When the thermal properties of the object located in the foreground of a scene are slightly different, higher or lower, to those of the background, the region corresponding to the thermal image appears in contrast to the background.

It is known that the first processing stage of the methods to calculate the position and the manner of moving is thresholding the thermal image. To that end, a simple intensity threshold can be used followed by a probabilistic model, thus offering a similar approach to the use of Support Vector Machines. It is also worth emphasizing, in relation to the invention proposed, the new background subtraction techniques to extract objects located on the foreground of the thermal image in a robust way under different environmental conditions and an estimate study of movement in real time specifically designed to measure the movement of a vehicle using a sequence of infrared images taken during the whole night.

As a movement detection method, there is the optical flow method, which is used in mobile robot navigation. The image flow divergence has been used to orientate a robot indoors estimating the collision time. On the other hand, optical flow magnitude differences have been used to classify objects moving at different speeds and to simplify road traffic navigation. The optical flow has also been used in dynamic models of guided direction, obstacle avoidance and route selection. It also enables to track the characteristics of the objects from the moment they appear on the screen until they interact with the sensors of the robot.

Unfortunately, the optical flow techniques require capturing images in real time to work appropriately. In addition, the identification of moving objects of a video sequence is a critical and fundamental task in many computer vision applications. And, in robotics mobile applications, the processing of images in real time is not possible yet. Therefore, image difference techniques are a good alternative to optical flow. Evidently, the mobile robot will have to stop when it takes the images. A common approach in image difference techniques is to make a subtraction with respect to the background that identifies the moving objects well enough from a video frame that significantly differs from the background of the image. This solution is not valid in mobile robotics, especially in the visual surveillance area, where the environment is intrinsically unknown, and it is not possible to know the background.

Therefore, it is desirable a system that solves the limitations of the state of the art.

### DESCRIPTION OF THE INVENTION

The present invention introduces a new approach to real-time people segmentation through the processing of images captured by an infrared thermal camera.

The invention starts with a static analysis phase for the detection of human candidates by means of a series of image processing techniques such as normalization and thresholding. Likewise, the invention is capable of integrating the movement information as a complementary source for human detection. For this latter case, the invention contemplates two embodiment options: through movement calculation by optical flow and through movement calculation by image difference.

The first option uses the Lucas and Kanade algorithm without pyramids to filter the moving objects located on the foreground of the movement present on the background of the scene. The algorithm aligns two images for more coincidence between them and determines the movement between them. It is assumed that the images are barely aligned and Newton-Raphson iteration is used to calculate the error gradient.

The second option uses a classic method of moving image difference to filter the movement of the objects on the foreground of the movement of the background scene.

The results of both proposals are compared to improve the human detection. In fact, the optical flow and image difference specially study the movement of areas located on the foreground and obtained in a previous static detection of human candidates.

Next, the regions of interest are defined to evaluate the content of each one of them. The objective is to verify if the region of interest contains one human candidate or more than one. If the region of interest can contain more than one person, the region is divided to adjust to each new candidate, as regards height and width.

The present invention comprises a surveillance method and system by infrared thermal camera.

The surveillance method by infrared thermal camera comprises the following stages:
a- calculating, from an image captured by an infrared thermal camera, a first soft threshold, preferably calculated in an experimental way, and preferably equivalent to 5/4 of the mean of the last ten images captured plus standard deviation;
b- pre-processing the image captured by infrared thermal camera to obtain a pre-processed image suitable for its later processing;
c- binarizing the pre-processed image by means of a thresholding method based on the first soft threshold to determine regions of interest in the binary image;
d- applying morphological opening and closing operations to group the regions of
   interest of the binary image;
e- obtaining the regions of interest of the image by means of the application of minimum area functions.
   The coordinates of these regions of interest of the binary image are transferred to the pre-processed non-binarized image of the b stage in order to carry out the next processing of rows and columns on the regions of interest in grayscale, therefore, for each one of the regions of interest of the pre-processed image in grayscale;
f- column processing, before stage c, comprising:
   - making a histogram from the region of interest in grayscale by means of the addition of the gray values of the pixels in the columns belonging to the region of interest analyzed;
   - determining a first maximum threshold and a first minimum threshold from the histogram made in order to determine the number of objects present in the region of interest;
   - applying the first maximum threshold and the first minimum threshold to the binary image from which the histogram was obtained to delimit the columns of the region of interest containing objects of interest;
g- row processing, each region of interest, both the non-divided initial regions and the new sub-regions of interest obtained at the previous stage f, comprising:
   - establishing a maximum height, where the first non-null pixel of the binary region is found, and a minimum height, where the last non-null pixel is found, to determine the real height of the object of interest, contained in the region analyzed;
   - applying a morphological closing operation to join small isolated regions of interest;
h- verifying, for each one of the objects of interest found in the regions of interest of the binary image, shape and position restrictions to confirm if the objects of interest can be classified as human beings. These restrictions verify the size of the spots according to the distance to the camera at which they are found as well as their height and width relations so as to discard spots that cannot contain humans.
   The stage of pre-processing the image captured by the surveillance method by infrared thermal camera comprises the following stages:
   - normalizing the image captured by the infrared thermal camera according to a normalization factor, which is preferably equal to the mean of the last ten images captured, to process images of equal size;
   - applying to the normalized image a second threshold, preferably calculated in an experimental way, and preferably equivalent to 3*5/4 of the mean of the last ten images, to eliminate erroneous pixels.

The surveillance method by infrared thermal camera also comprises performing a dynamic analysis to filter the movement of objects with respect to the movement of the scene as well as a stage in charge of fusing together the information obtained thorough the dynamic analysis and the static analysis.

The surveillance method by infrared thermal camera makes the dynamic analysis by optical flow comprising the following stages:
i- obtaining, from the captured images corresponding to the current instant and the previous instant, the magnitude of the movement by means of the Lucas-Kanade algorithm without pyramids;
j- calculating a third soft threshold and a third hard threshold from the result of the previous algorithm;
k- binarizing the image resulting from the application of the Lucas-Kanade algorithm by means of the third soft threshold;
l- binarizing the image resulting from the application of the Lucas-Kanade algorithm by means of the third hard threshold;
m- discarding the region of the binary image resulting from the application of the third soft threshold not comprising any region in common with the binary image resulting from the application of the third hard threshold;
n- establishing a fourth threshold referring to the percentage of inclusion between the regions obtained by optical flow with the regions obtained when applying the first soft threshold to avoid the application of the first and second maximum and minimum thresholds and proceed to the verification of the shape and position restrictions of stage h.

The dynamic analysis by optical flow carried out using the surveillance method also comprises the stage of multiplying the image captured by the infrared thermal camera to highlight the contrast of the image.

The surveillance method by infrared thermal camera carries out the dynamic analysis through image difference comprising the following stages:
o- differentiating the images captured by the infrared thermal camera corresponding to the current instant and the previous instant;
p- binarizing the difference through the application of a fifth threshold, preferably calculated in an experimental way, and preferably equivalent to 15, to eliminate rests of the difference of the images captured;
q- calculating the percentage of inclusion of the binary image obtained in p with the image obtained to apply the first soft threshold;
r- establishing a sixth threshold referring to the previous percentage to discard the regions of interest obtained in the previous analysis by image difference which do not coincide with the regions of interest obtained in the static analysis of the binary image resulting from the application of the first soft threshold.

The surveillance method by infrared thermal camera carries out the fusion of information obtained by the dynamic analysis and the static analysis, comprising the following stages:
- joining the regions obtained by optical flow in the m stage with the regions obtained by static analysis when applying the first soft threshold on the image captured by the infrared thermal camera;
- joining the images obtained by image difference in the p stage with the regions obtained by static analysis when applying the first soft threshold on the image captured by the infrared thermal camera;

The present invention also comprises a surveillance system by infrared thermal camera.

The surveillance system by infrared thermal camera comprises:
- an infrared thermal camera configured to capture images;
- means to process data configured to:
   - calculate, from the image captured by an infrared thermal camera, a first soft threshold, preferably calculated in an experimental way, and preferably equivalent to 5/4 of the mean of the last ten images captured plus the standard deviation;
   - pre-processing the image captured by the infrared thermal camera to obtain an adequate pre-processed imaged for its later processing;
   - binarize the pre-processed image by means of a thresholding method based on the first soft threshold to determine the regions of interest in the binary image;
   - apply morphological opening and closing operations to group the regions of interest of the binary image;
   - obtain the regions of interest of the image through the application of functions of minimum area;

The coordinates of these regions of interest of the binary image are transferred to the pre-processed image and without binarizing of step b to carry out the next processing of rows and columns' on the regions of interest in grayscale, therefore, for each one of the regions of interest of the pre-processed image in grayscale:
- processing by columns, before stage c, comprising:
   - making a histogram from the region of interest in grayscale through the addition of the gray values of the pixels in the columns belonging to the region of interest analyzed;
   - determining a first maximum threshold and a first minimum threshold from the histogram made in order to determine the number of objects present in the region of interest;
   - applying the first maximum threshold and the first minimum threshold to the binary image from which the histogram was obtained to delimit the columns of the region of interest containing objects of interest;
- processing by rows, each region of interest, both the non-divided initial regions and the new sub-regions of interest obtained at the previous stage f, comprising:
   - establishing a maximum height, where the first non-null pixel of the binary region is found, and a minimum height, where the last non-null pixel is found, to determine the real height of the object of interest, contained in the region analyzed;
   - applying a morphological closing operation to join small isolated regions of interest;
- verifying, for each one of the objects of interest found in the regions of interest of the binary image, shape and position restrictions to confirm if the objects of interest can be classified as humans.

These restrictions verify the size of the spots according to their distance to the camera as well as their height and width relations in order to discard spots that cannot contain human beings.

The image processing means of the surveillance system by infrared thermal camera are configured, to obtain the pre-processed image, to:
- normalize the image captured by the infrared thermal camera according to a normalization factor, which is preferably equal to the mean of the last ten images captured, to process images of equal size;
- apply to the normalized image a second threshold, preferably calculated in an experimental way, and preferably equivalent to 3*5/4 of the mean of the last ten images, to eliminate erroneous pixels.

The image processing means of the surveillance system by infrared thermal camera are additionally configured to make a dynamic analysis to filter the movement of the objects with respect to the movement of the scene as well as a stage in charge of fusing the information obtained by the dynamic analysis and static analysis.

The image processing means of the surveillance system by infrared thermal camera are configured to make a dynamic analysis by optical flow, to:
- obtain, from the captured images corresponding to the current instant and the previous instant, the magnitude of the movement by means of the Lucas-Kanade algorithm without pyramids;
- calculate a third soft threshold and a third hard threshold from the result of the previous algorithm;
- binarize the image resulting from the application of the Lucas-Kanade algorithm through the third soft threshold;
- binarize the image resulting from the application of the Lucas-Kanade algorithm through the third hard threshold;
- discard the region of the binary image resulting from the application of the third soft threshold not comprising any region in common with the binary image resulting from the application of the third hard threshold;
- establish a fourth threshold referring to the percentage of inclusion between the regions obtained by optical flow with the regions obtained when applying the first soft threshold to avoid the application of the first and second maximum and minimum thresholds and proceed to the verification of the shape and position restrictions of stage h.

The processing means of the surveillance system by infrared thermal camera, configured to perform a dynamic analysis by optical flow, are additionally configured to multiply the image captured by the infrared thermal camera to highlight the contrast of the image.

The processing means of the surveillance system by infrared thermal camera are configured to make a dynamic analysis through image difference, to:
- differentiate the images captured by the infrared thermal camera corresponding to the current instant and the previous instant;
- binarize the difference through the application of a fifth threshold, preferably calculated in an experimental way, and preferably equivalent to 15, to eliminate rests of the difference of the images captured;
- calculate the percentage of inclusion of the binary image obtained in p with the image obtained when applying the first soft threshold;
- establish a sixth threshold referring to the previous percentage to discard the regions of interest obtained in the previous analysis by image difference which do not coincide with the regions of interest obtained in the static analysis of the binary image resulting from the application of the first soft threshold.

The processing means of the surveillance system by infrared thermal camera are configured to fuse the information obtained by the dynamic analysis and static analysis, to:
- join the regions obtained by optical flow in the m stage with the regions obtained by static analysis when applying the first soft threshold on the image captured by the infrared thermal camera;
- join the regions obtained by image difference in the p stage with the regions obtained by static analysis when applying the first soft threshold on the image captured by the infrared thermal camera.

The surveillance system by infrared thermal camera also comprises the realization of a robot vehicle comprising a base platform with wheels and a chassis to support the infrared thermal camera and a plurality of external sensors and sensors integrated to the robot vehicle.

The processing means of the robot vehicle are additionally configured to:
- verify the detection in the external sensors to approach the focus of detection and orientate the infrared thermal camera in said direction
- verify the detection in the integrated sensors to orientate the infrared thermal camera in the detection direction;
- verify the movement of the platform after the verification of the sensors and the orientation of the infrared thermal camera;
- verify the selection of the dynamic processing of image difference in case there is no platform movement;
- verify the selection of the optical flow dynamic processing in case there is platform movement;
- send an alarm signal after detecting movement by means of one of the dynamic image processing methods;
- start recording with a dome camera;
- execute the movement pattern with the dome camera;
- finish the recording with the dome camera.

### BRIEF DESCRIPTION OF THE DRAWINGS

The figures are presented below in order to help understand the invention better, as an illustrative but non-limiting example thereof.
Figure 1 shows a schematic diagram of the general functioning of the invention.
Figure 2 shows the flowchart of the static analysis processing of the images captured.
Figure 3 shows the flowchart of the static and dynamic analysis processing carried out by image difference.
Figure 4 shows the flowchart of the static analysis processing carried out by optical flow.
Figure 5 shows the flowchart of an example of the surveillance system based on the application of a robot vehicle.

### DETAILED DESCRIPTION OF AN EMBODIMENT

The object of the invention is to introduce, by the processing of images captured by an infrared thermal camera, a new real-time segmentation technique to detect people.

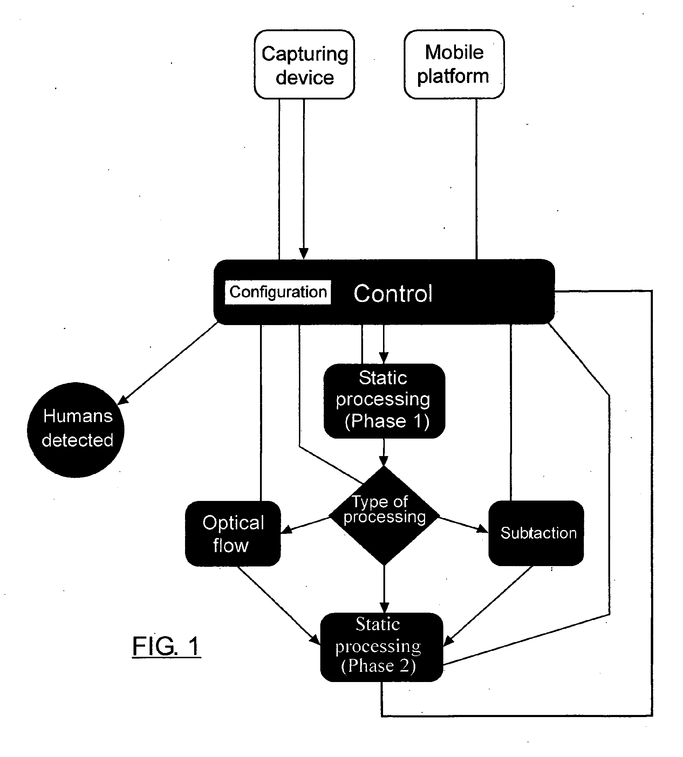

The invention is developed as it can be seen in figure 1 according to the following stages:
1- A first static analysis containing:
   - "Detection of human candidates in regions of interest;"
2- A dynamic analysis by optical flow (optional);
3- A dynamic analysis by image difference (optional);
4- Fusion of the static and dynamic information (only if stage 2 or 3 is carried out);
5- A second static analysis containing the following steps:
   - "Definition of human candidates in regions of interest;"
   - "Vertical delimitation of people" and "Horizontal delimitation of people."

### Static analysis: "Detection of human candidates in regions of interest"

The system starts with the static analysis of an inlet image captured by the infrared thermal camera. In the first place, a first soft threshold is calculated, after which a scale change is made. The objective is to normalize all input images to work with images with the same value scale. The normalization uses a correction factor which is preferably calculated as the mean of the last ten images captured. The image captured is multiplied by this correction factor and then it is divided by the mean of the image to equalize all the images.

The following step eliminates the incandescent points of the image that can cause problems when showing areas with elevated temperatures. The image is scaled, a second threshold is calculated which is preferably equivalent to 3*5/4 of the mean of the last ten images captured.

The system uses the first soft threshold, which is preferably calculated as 5/4 of the mean of the last ten images plus the standard deviation of the image, to carry out a binarization with the purpose of isolating regions of interest with human candidates. This first soft threshold obtains the regions of the image containing areas of mean temperature and which are considered to correspond to human beings. Under this hypothesis, the areas of mean temperature of the image are isolated for their later processing.

Next, the system carries out morphological opening and closing operations to eliminate the isolated pixels and to join the isolated areas after the binarization. These operations considerably improve the shapes of the regions obtained after the binarization.

It is worth highlighting that under these circumstances, human bodies are inadequately detected. This is the case, for example, of images taken outdoors in cold winter days in which human beings to be detected wear coats. This entails an important challenge in the efficient detection of human beings since the head and the legs are detected separately. Fortunately, the situation is solved adding bonds that join the head with the legs of the candidate. These bonds consist of drawing unions on disconnected regions in the image, as long as they satisfy adequate conditions to be considered head and legs, wherein said conditions refer mainly to a possible human-like height or position between head and legs.

Finally, a minimum area function is applied, depending on the size of the image, and regions of interest are obtained of the image, said regions supposedly containing human beings.

### "Definition of human candidates in regions of interest"

In this stage the system works with the list of regions of interest obtained at the end of the previously explained stage, concretely after the application of the minimum area function.

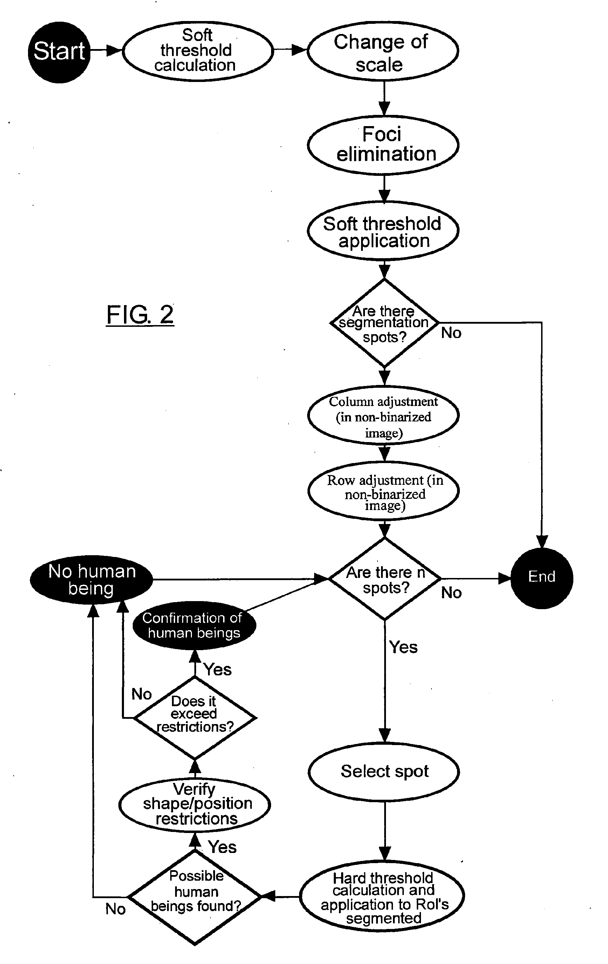

Figure 2 shows in a schematic way the steps explained in the previous stage and those which are carried out in this stage to facilitate tracking them when a complete static analysis is carried out.

In this stage of "Definition of human candidates in regions of interest", it is necessary to validate the content of each region of interest to find out if it contains only one human candidate or more than one. In this way, the algorithm processes each region of interest separately.

### Vertical delimitation of people

The first step is to take the coordinates of the regions of interest obtained in the previous stage and transfer them to the non-binarized image, resulting from the pre-processing, to obtain regions of interest in the image in grayscale which can contain human beings. In this way, a histogram is obtained adding the gray level value corresponding to each pixel of the column. The histogram shows the areas of interest with the greatest heat concentrations. A double objective is pursued when calculating the histogram. In the first place, verifying the presence and location of human heads, and in the second place, as the region of interest can contain several people very close to one another, helping separate groups of human beings if this is the case. To that end, a first maximum threshold and a first minimum threshold is searched to enable to differentiate the presence of human beings in the region of interest analyzed.

For this, a local maximum and minimum in the histogram is searched to establish the different sources of heat. To evaluate if a column of the histogram contains a local maximum or minimum the aforementioned first maximum threshold and first minimum threshold are fixed.

Each area of the region of interest that exceeds the value of the first maximum threshold fixed is considered as containing one human head since heads normally have a higher temperature than the rest of the body which is covered by clothes. For this reason, the first maximum threshold is fixed as the double of the addition of the gray level mean plus the standard deviation of the region of interest. On the other hand, the first minimum threshold indicates those areas of the regions of interest whose addition of their thermal levels is very low. It is assumed that these regions belong to spaces between two human beings. Regions are searched where the addition of the gray levels of their columns is lower than 90% of the gray level mean of the region of interest.

### Horizontal delimitation of people

All human beings contained in one of the areas of the region of interest also called subregions of interest, obtained in the previous step, "Vertical definition of people", have the same height. In this way, in this stage it is desired to adapt the height of each subregion of interest to the real height of the human being contained.

The adjustment of the rows is carried out for each new subregion of interest generated by the previous adjustment of the columns, through the application of a threshold consisting on the gray level mean of the subregion of interest. This calculation is applied separately for each subregion of interest to prevent the rest of the image from influencing the result. To that end, the subregion of interest is binarized in order to delimit its maximum and minimum height. Next, a closing operation is carried out to join the points isolated by binarization. To delimit the maximum and minimum height, the subregion of interest is covered upside down, row by row, establishing as maximum height that where the first non-null pixel of the binarized subregion is found and establishing as minimum height that where the last non-null pixel is found.

### Dynamic analysis: Optical flow

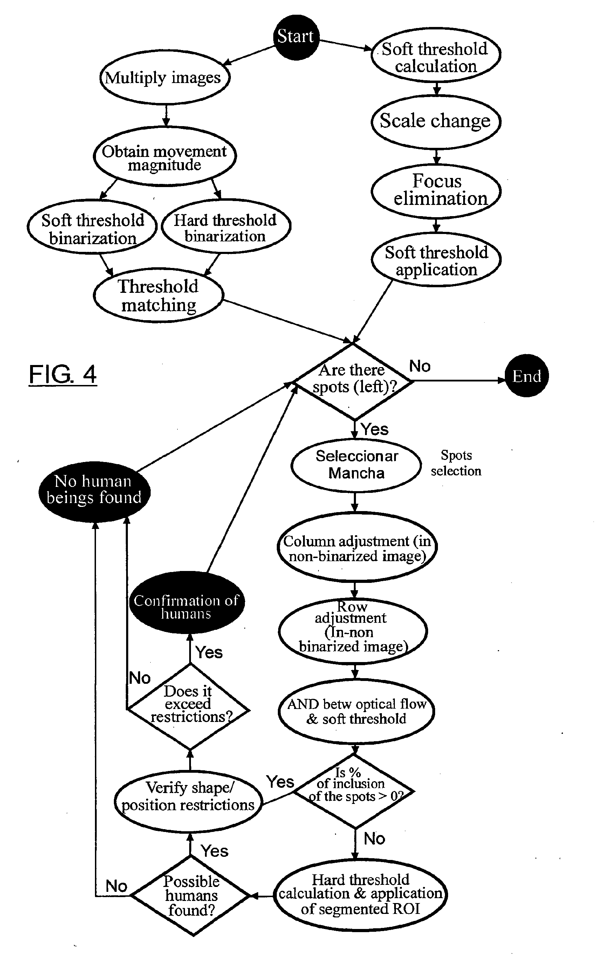

The invention contemplates the possibility of carrying out a dynamic analysis or an image movement analysis as shown in figure 4. One of the options contemplated by the invention consists in carrying out the dynamic analysis through the calculation by optical flow. The optical flow has been selected because it enables to discard the movement of the scene due to the movement of the robot. To that end, the main movement of the scene is discarded to focus only on movements coming from a direction other than that of the movement of the robot. Of course, the image movement analysis uses two input images, the image corresponding to the current instant and the image corresponding to the previous image.

In the first place, the current image and the previous one are multiplied to increase contrast, in this way, the dark values emphasize their darkness and the clear ones become clearer.

The dynamic analysis requires the calculation of the movements corresponding to the movement of each pixel of the two normalized input images. The calculation of the optical flow provides two images with gray values where each pixel reflects the angular movement detected, keeping the movements both in the x axis and in the y axis.

In the first place, the algorithm makes the calculation of the speed by optical flow. The optical flow selected uses the Lucas-Kanade method without pyramids. The calculation of the speeds, as a result of the optical flow, is transformed in angles and magnitudes. The results obtained up to this point clearly indicate that for our purpose, the angles are less important than the magnitudes, or moments, of the movement. Indeed, on the one hand, the movements of the non-rigid objects occur in very different directions, and on the other hand, the angles with magnitudes of reduced value can be caused by the noise of the image.

The average value of the magnitudes of these images is lower than 10. Therefore, two thresholds are used, a third soft threshold, preferably with a value of 10, and a third hard threshold, preferably with a value of 25, to delimit the regions of interest that can contain human beings. In the first place, to obtain the most representative values, the third soft threshold is applied to the magnitudes of movement of the image. Later, an opening filter is applied to eliminate the isolated pixels. Next, the third hard threshold is applied to obtain the areas of greatest movement. The objective is to verify if each region of interest detected with the third hard threshold is contained in an area detected with the third soft threshold. The areas which do not satisfy this condition are discarded.

### Image difference

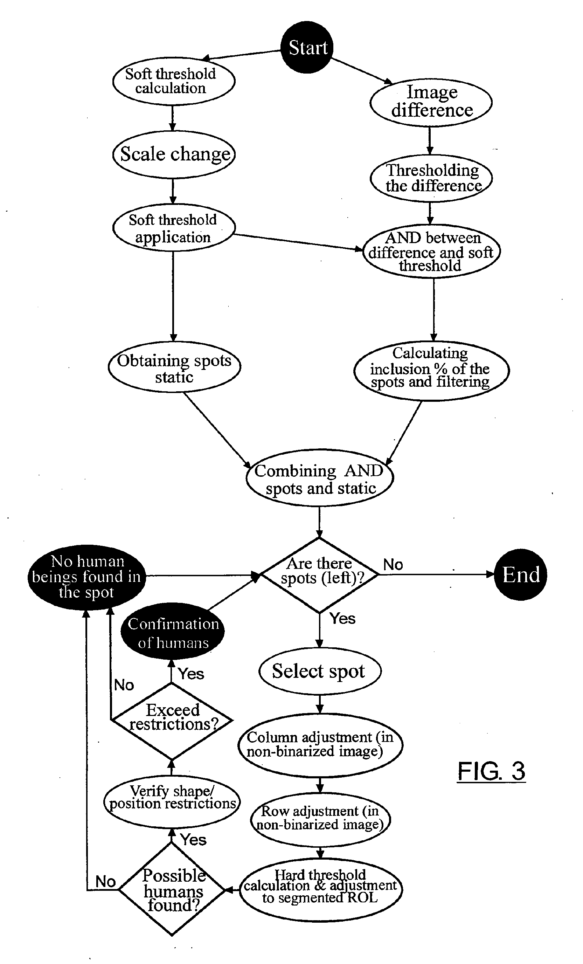

The image difference represents another technique to detect the image movement as shown in figure 3. The image movement analysis uses again two input images, the image corresponding to the current instant and the image corresponding to the previous instant.

The following step of the algorithm is to carry out an image difference to obtain the movement of the scene. The image obtained presents, on the one hand, movement of objects in the image corresponding to the current instant, wherein it is considered that said image contains the correct position, and on the other, the object in the previous position. The rest of the area is the residual movement of the differentiated image. After this, the image is binarized according to a fifth threshold, preferably fixed in 15, to eliminate the residual image corresponding to the previous instant situation.

Finally, it is worth pointing out that in some cases like in those of extreme cold, bonds are added that join legs and heads to completely detect human beings.

### Static and dynamic information fusion

This stage improves the detection of human candidates combining the results of the previous stages. It is integrated as part of the implementation by optical flow in figure 4 and by image difference in figure 3.

The optical flow and image difference emphasize the movement areas obtained in the initial detection of human candidates carried out by static analysis. The possibilities of the moving shapes being humans increase, since the resulting image indicates if there is a high enough quantity of moving pixels inside the delimited areas in the regions of interest obtained in the static stage. With this information the list of regions of interest is updated.

To carry out the fusion between the static and dynamic images, the system carries out a logic intersection operation. The idea is to place each region of interest obtained in the dynamic phase on the binarized static image. If the quantity of common pixels with a value other than zero does not exceed a specific threshold, the region is discarded. If it exceeds the threshold it is listed.

An example of implementation consists of an autonomous robot vehicle that conducts rounds of surveillance on the premises. Additionally, the surveillance system implements methods to detect intrusions that reinforce the system, one of which consists of a method to detect human beings based on an infrared thermal camera. Additionally, the surveillance system includes several methods to collect evidence after an intrusion alarm so that they are sent to the alarm central or control post.

The architecture and structure of a typical service robot is known in the technical literature, although a representative implementation is described. The vehicle has a base platform with wheels and a chassis that rests on the base and serves as support for the sensors and cameras of the surveillance and robot navigation system.

The robot includes electronic and mechanic components that help the navigation. These components are obstacle sensors located at the front part, engines with codifiers. The obstacle sensors can be of various types, including ultrasound, laser, radar, etc. of implementation known in the technical literature. The base platform includes engines to provide traction to the vehicle. The engines have codifiers which provide odometric information on the relative position of the vehicle in its navigation. In a typical configuration the system can have two wheels plus a castor wheel, or four wheels.

The chassis includes the sensors and cameras used in surveillance. In a preferred configuration, the movement sensors PIR (Passive Infra Red) or radar, and in general other surveillance sensors, thermal camera for the detection of intruders, camera with motor-driven Pan/Tilt system are installed to record evidence, or other surveillance cameras that could be coupled to the chassis are installed.

Other external alarm sensors communicate with the surveillance system through a communication channel.

The sensors and cameras are controlled by a control system featuring a computer and electronic control modules.

The surveillance system has the following working sequence: external sensors verification, integrated sensors verification, thermal camera verification, alarm signal activation and evidence recording. In an implementation mode, the user can select the activation of these modes through the control panel, while in another implementation example, the system internally switches from one mode to another.

In a typical implementation, the platform admits the execution of surveillance rounds in a regular manner following a set of pre-programmed routes, randomly executed, executing surveillance and inspection tasks.along the route. Automatic inspection of the premises and securing safety conditions such as the verification of the correct state of doors, windows, value objects location, etc. Active surveillance in the face of the potential entrance of intruders in the security area establishing guard points along the route where the system carries out intensive surveillance tasks with the installed sensors.

The sequence comprises the following steps:

### 1) Detection of intruders through external sensors:

A way of detecting intruders considers as the alarm source sensors that are external to the system, such as volumetric sensors, perimeter sensors, cameras, door sensors, gas sensors, fire sensors, etc. The vehicle can receive the pre-alarms through the wireless communication channel. An example of behavior would make the vehicle direct to the alarm point to which, previously, the position of these points had been entered in the data base and robot map; once it is located at a specific distance, for example 10 meters, activate the detection of intruders based on the thermal camera and the evidence collected.

### 2) Detection of intruders by means of integrated sensors:

The system responds to the sensors installed in the platform to detect intruders, behaving appropriately according to the characteristics of the sensor emitting the pre-alarm.

Two typical sensors are detailed bellow:

### 2a) Detection based on a microphone:

The system responds to alarms made by sounds which are higher than a predetermined threshold. In this case, it is verified if there is an alarm of the radar, and if there is, the orientation of the alarm focus is verified. If it is not active, the detection system based on thermal camera is activated and the camera is orientated towards the alarm focus. If the fixed camera is implemented on the robot, the vehicle is orientated towards the alarm focus determined by the radar alarm. If intruders are detected, the information on the distance to the intruders provided by the obstacle sensors is used, in order to improve intruder detection and evidence recording. If the detection is positive, the evidence recording by a dome and infrared thermal camera is activated making recordings towards the alarm focus, when the orientation is known. The information of the distance to the alarm focus is used to adjust the zoom of the dome camera. Next, there is an exploration following a predetermined sequence as described later.

### 2b) Detection based on radar:

The system responds to movements within 360 degrees of the system. In case of alarm, and if not active, the detection system based on thermal camera is activated and the camera is orientated to the alarm focus. In case of implementation of the fixed camera on a robot, the vehicle is orientated towards the alarm focus determined by the radar alarm. If intruders are detected, the information on the distance to the intruders provided by the obstacle sensors is used, in order to improve intruder detection and evidence recording. If the detection is positive, the evidence recording by a dome and infrared thermal camera is activated making recordings towards the alarm focus, when the orientation is known. The information of the distance to the alarm focus is used to adjust the zoom of the dome camera. Next, there is an exploration following a predetermined sequence as described later.

### 3) Detection of intruders by means of thermal camera:

The method of intruder detection based on thermal camera is configured according to the movement of the platform, optimizing the detection mode. Then, this method is in charge of verifying if the possible pre-alarms have to be elevated to alarm or not, in the already specified manner.

### 4) Alarm signal activation:

If the threat is finally verified, the pre-alarm is elevated to alarm, and it is sent to the corresponding alarm central.

### 5) Evidence collection:

The objective of this way of behavior is to collect evidence of the intrusion, which is wirelessly transmitted to a control center, where the alarm, severity and decision taking is confirmed in view of the received data.

The mode is activated after an intruder is detected. A dome camera is in charge of exploring the alarm area and collecting evidence. If the alarm is triggered, the camera is orientated towards the alarm focus, based on the information on angle orientation received from the radar and the zoom is adjusted based on the distance received by the obstacle sensors, in order to have a field of vision of the threat that is detailed enough. Next, the threat is recorded. The information collected by the dome camera, the thermal camera and the microphone is recorded. Its duration is pre-established in x seconds, being x a value subject to configuration.

In the implementation example based on the robot, the vehicle is capable of automatically directing to the alarm focus for its confirmation and evidence collection. To that end, the navigation system generates a path towards the alarm point received, to a distance close to the threat. In an implementation example, this distance would be approximately 10 meters.

If any of the active sensors informs about the position of the threat the robot is orientated towards it accurately focusing on the threat based on the information provided by these sensors. In another case, a predetermined step pattern is performed, which in a typical configuration can consist of a 360 degree scanning with stops at 30-degree intervals, stopping the camera at each point for a time directly proportionate to the quantity of movement detected in the focused scene, and applying an increasing threshold that reduces the level of interest, in order to prevent the process from being blocked by foreign elements in continuous movement.

After a maximum time has elapsed in the accurate focus mode, or when the trajectory in the scanning mode has been completed, the recordings are deactivated and the previous surveillance mode is reestablished.

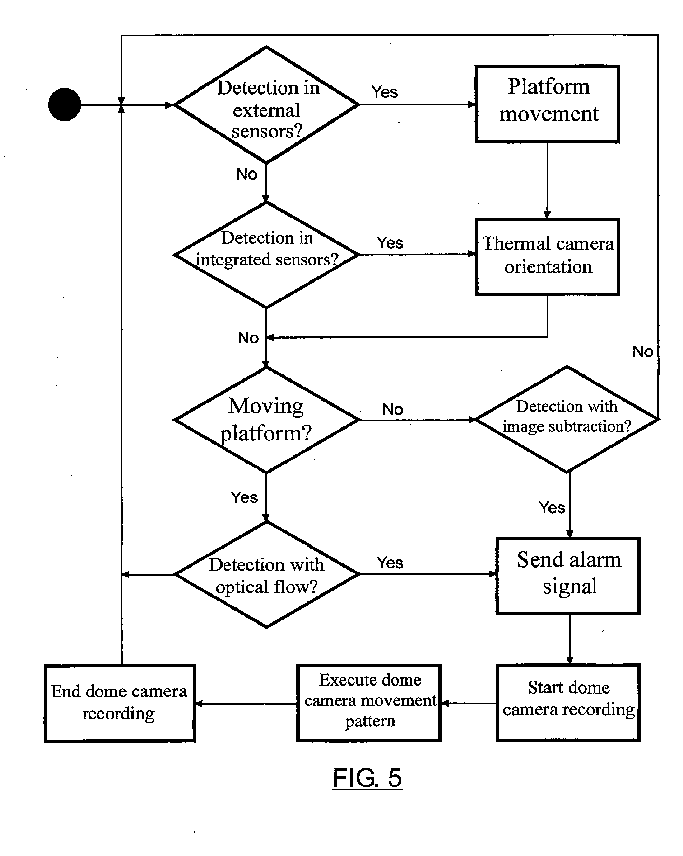

An example of the surveillance system operation carried out by the robot vehicle can be seen in figure 5.

Finally, once the invention has been clearly described, it is stated that the previously described particular embodiments can have modifications as to their details as long as the fundamental principle and essence of the invention are not altered.

## Claims

1. Surveillance method by an infrared thermal camera, **characterized in that** it comprises the following stages:
a- calculating, from an image captured by an infrared thermal camera, a first soft threshold based on the measurements of the temperature of the image mentioned;
b- pre-processing the image captured by infrared thermal camera to obtain a pre-processed image adequate to its later processing;
c- binarizing the pre-processed image by means of a thresholding method based on the first soft threshold to determine the regions of interest in the binary image;
d- applying morphological opening and closing operations to group the regions of interest of the binary image;
e- obtaining the regions of interest of the image through the application of minimum area functions;
for each one of the regions of interest of the pre-processed image in grayscale:
f- column processing, before stage c, comprising:
• making a histogram from the region in grayscale through the addition of the gray values of the pixels in the columns belonging to the region of interest analyzed;
• determining a first maximum threshold and a first minimum threshold from the histogram made in order to determine the number of objects present in the region of interest;
• applying the first maximum threshold and the first minimum threshold to the binary image from which the histogram was obtained to delimit the columns of the region of interest containing objects of interest;
g- row processing, each region of interest, comprising:
• establishing a maximum height and a minimum height to determine the real height of the object of interest contained in the region analyzed;
• applying a morphological closing operation to join small isolated regions of interest;
h - verifying, for each one of the objects of interest found in the regions of interest of the binary image, shape and position restrictions to confirm if the objects of interest can be classified as human beings.

2. Surveillance method by an infrared thermal camera according to claim 1, **characterized in that** the stage of pre-processing the image captured comprises the following stages:
- normalizing the image captured by the infrared thermal camera according to a normalization factor to process images of equal size;
- applying to the normalized image a second threshold to eliminate erroneous pixels.

3. Surveillance method by an infrared thermal camera according to any of the claims 1-2, **characterized in that** it also comprises performing a dynamic analysis to filter the movement of objects with respect to the movement of the scene as well as a stage in charge of fusing together the information obtained thorough the static analysis and the dynamic analysis.

4. Surveillance method by an infrared thermal camera according to claim 3, **characterized in that** the dynamic analysis is carried out by optical flow, comprising the following stages:
i- obtaining, from the images captured corresponding to the current instant and the previous instant, the magnitude of the movement by means of the Lucas-Kanade algorithm without pyramids;
j- calculating a third soft threshold and a third hard threshold from the result of the previous algorithm;
k- binarizing the image resulting from the application of the Lucas-Kanade algorithm through the third soft threshold;
l- binarizing the image resulting from the application of the Lucas-Kanade algorithm through the third hard threshold;
m- discarding the region of the binary image resulting from the application of the third soft threshold not comprising any region in common with the binary image resulting from the application of the third hard threshold;
n- establishing a fourth threshold referring to the percentage of inclusion between the regions obtained by optical flow with the regions obtained when applying the first soft threshold to avoid the application of the first and second maximum and minimum thresholds and proceed to the verification of the shape and position restrictions of stage h.

5. Surveillance method by an infrared thermal camera according to claim 4, **characterized in that** the dynamic analysis carried out by optical flow additionally comprises the stage of multiplying the image captured by the infrared thermal camera to highlight the contrast of the image.

6. Surveillance method by an infrared thermal camera according to claim 3, **characterized in that** the dynamic analysis is carried out through image difference comprising the following stages:
o- differentiating the images captured by the infrared thermal camera corresponding to the current instant and the previous instant;
p- binarizing the difference through the application of a fifth threshold to eliminate rests of the difference of the images captured;
q- calculating the percentage of inclusion of the binary image obtained in p with the image obtained to apply the first soft threshold;
r- establishing a sixth threshold referring to the previous percentage to discard the regions of interest obtained in the previous analysis by image difference which do not coincide with the regions of interest obtained in the static analysis of the binary image resulting from the application of the first soft threshold.

7. Surveillance method by an infrared thermal camera according to any of the claims 1-6, **characterized in that** the fusion of the information obtained by the dynamic and static analysis, comprises the following stages:
- joining the regions obtained by optical flow in the m stage with the regions obtained by static analysis when applying the first soft threshold on the image captured by the infrared thermal camera;
- joining the regions obtained by image difference in the p stage with the regions obtained by static analysis when applying the first soft threshold on the image captured by the infrared thermal camera.

8. Surveillance system by an infrared thermal camera **characterized in that** it comprises:
- an infrared thermal camera configured to capture images;
- means to process data configured to:
• calculate, from the image captured by an infrared thermal camera, a first soft threshold based on temperature measurements of the aforementioned image;
• pre-processing the image captured by the infrared thermal camera to obtain an adequate pre-processed imaged for its later processing;
• binarize the pre-processed image by means of a thresholding method based on the first soft threshold to determine the regions of interest in the binary image;
• apply morphological opening and closing operations to group the regions of interest of the binary image
• obtain regions of interest of the image through the application of functions of minimum area;
for each one of the regions of interest of the pre-processed image in grayscale:
• processing by columns, before stage c, comprising:
• making a histogram from the region of interest in grayscale through the addition of the gray values of the pixels in the columns belonging to the region of interest analyzed;
• determining a first maximum threshold and a first minimum threshold from the histogram made in order to determine the number of objects present in the region of interest;
• applying the first maximum threshold and the first minimum threshold to the binary image from which the histogram was obtained to delimit the columns of the region of interest containing objects of interest;
• processing by rows, each region of interest, comprising:
• establishing a maximum height and a minimum height to determine the real height of the object of interest contained in the region analyzed;
• applying a morphological closing operation to join small isolated regions of interest;
• verify, for each one of the objects of interest found in the regions of interest of the binary image, shape and position restrictions to confirm if the objects of interest can be classified as human beings.

9. Surveillance system by an infrared thermal camera according to claim 8, **characterized in that** the processing means are configured to obtain the pre-processed image, to:
- normalize the image captured by the infrared thermal camera according to a normalization factor to process images of equal size;
- apply to the normalized image a second threshold to eliminate erroneous pixels.

10. Surveillance system by an infrared thermal camera according to any of the claims 8-9, **characterized in that** the processing means are additionally configured to perform a dynamic analysis to filter the movement of the objects with respect to the movement of the scene as well as a stage in charge of fusing the information obtained by the dynamic analysis and the static analysis.

11. Surveillance system by an infrared thermal camera according to claim 10, **characterized in that** the processing means are configured for carrying out a dynamic analysis by optical flow, to:
- obtain, from the captured images corresponding to the current instant and the previous instant, the magnitude of the movement by means of the Lucas-Kanade algorithm without pyramids;
- calculate a third soft threshold and a third hard threshold from the result of the previous algorithm;
- binarize the image resulting from the application of the Lucas-Kanade algorithm through the third soft threshold;
- binarize the image resulting from the application of the Lucas-Kanade algorithm through the third hard threshold;
- discard the region of the binary image resulting from the application of the third soft threshold which does not comprise any region in common with the binary image resulting from the application of the third hard threshold;
- establish a fourth threshold referring to the percentage of inclusion between the regions obtained by optical flow with the regions obtained when applying the first soft threshold to avoid the application of the first and second maximum and minimum thresholds and proceed to the verification of the shape and position restrictions of stage h.

12. Surveillance system by an infrared thermal camera according to claim 11, **characterized in that** the processing means configured to perform a dynamic analysis by optical flow are additionally configured to multiply the image captured by the infrared thermal camera to highlight the contrast of the image.

13. Surveillance system by an infrared thermal camera according to claim 10, **characterized in that** the processing means are configured for carrying out a dynamic analysis through image difference, to:
- differentiate the images captured by the infrared thermal camera corresponding to the current instant and the previous instant;
- binarize the difference through the application of a fifth threshold to eliminate rests of the difference of the images captured;
- calculate the percentage of inclusion of the binary image obtained in p with the image obtained to apply the first soft threshold;
- establish a sixth threshold referring to the previous percentage to discard the regions of interest obtained in the previous analysis by image difference which do not coincide with the regions of interest obtained in the static analysis of the binary image resulting from the application of the first soft threshold.

14. Surveillance system by an infrared thermal camera according to any of the claims 8-13, **characterized in that** the processing means are configured for the fusion of the information obtained by dynamic analysis and by static analysis, to:
- join the regions obtained by optical flow in the m stage with the regions obtained by static analysis when applying the first soft threshold on the image captured by the infrared thermal camera;
- join the regions obtained by image difference in the p stage with the regions obtained by static analysis when applying the first soft threshold on the image captured by the infrared thermal camera.

15. Robot vehicle incorporating a surveillance system by infrared thermal camera according to any of the claims 8-14, comprising a base platform with wheels and a chassis to support the infrared thermal camera and a plurality of external sensors and sensors integrated to the robot vehicle.

16. Robot vehicle according to claim 15, **characterized in that** the processing means are configured to:
- verify the detection in the external sensors to approach the focus of detection and orientate the infrared thermal camera in said direction;
- verify the detection in the integrated sensors to orientate the infrared thermal camera in the detection direction;
- verify the movement of the platform after the verification of the sensors and the orientation of the infrared thermal camera;
- verify the selection of the image difference dynamic processing in case there is no platform movement;
- verify the selection of the optical flow dynamic processing in case there is platform movement;
- send an alarm signal after detecting movement by means of one of the dynamic image processing methods;
- start recording with a dome camera;
- execute the movement pattern with the dome camera;
- finish the recording with the dome camera.
